# FASCICULE DE BREVET EUROPEEN

(11) **EP 1 503 116 B1**
(45) Date de publication et mention de la délivrance du brevet: **07.02.2007**
(21) Numéro de dépôt: 04291681.7
(22) Date de dépôt: 02.07.2004
(51) Int. Cl.: F16J 15/36, F16J 15/34

(54) **Garniture d'étanchéité pour arbre tournant**
Wellendichtung
Shaft seal

(30) Priorité: 29.07.2003 FR 0309294
(43) Date de publication de la demande: 02.02.2005
(73) Titulaire: Leonetti, Bernard, 75016 Paris (FR)
(72) Inventeur: Leonetti, Bernard, 75016 Paris (FR)
(74) Mandataire: Eidelsberg, Olivier Nathan

(56) Documents cités:
- WO-A-99/08026
- DE-C- 19 833 758

## Description

La présente invention se rapporte à un assemblage formant garniture d'étanchéité pour un arbre tournant. En général, ces garnitures d'étanchéité sont disposées autour d'un arbre qui tourne par rapport à un bâti fixe, traversé par l'arbre. On souhaite que l'arbre puisse tourner sans que pour autant par exemple du fluide puisse également traverser le bâti au niveau de la liaison ou du contact entre l'arbre et le bâti.

Ce type d'assemblage est constitué d'une première bague, d'une deuxième bague, comportant des moyens de fixation à un arbre pour en être solidaire en rotation, d'un joint étanche, notamment torique, reçu dans une rainure annulaire formée à l'intérieur de la première bague, d'une rondelle métallique également reçue dans la rainure annulaire de la première bague pouvant venir en contact avec le joint torique et d'au moins deux, de préférence trois bandes métalliques pliées en forme d'accordéon suivant plusieurs plis définissant entre eux des flans, chaque bande métallique en accordéon ayant une première patte d'extrémité et une deuxième patte d'extrémité opposée, la première patte étant repliée pour enserrer la rondelle métallique entre elle-même et le premier flan de l'accordéon tandis que la deuxième patte a une forme de crochet qui pénètre en ajustement serré dans un trou correspondant formé dans la deuxième bague dans le sens de l'axe longitudinal de la bague et s'accroche dans la paroi du trou (voir p. ex WO-A-99/08026)

Dans ce système de l'art antérieur, pour permettre un serrage convenable de la rondelle par la première patte d'extrémité, il est nécessaire de prévoir des découpes dans le bord périphérique de la première bague, du côté tourné vers la deuxième bague. Ces découpes permettent d'une part l'accès à la rondelle métallique au flan le plus voisin de la première patte pour que celui ci vienne en contact avec la rondelle pour enserrer cette dernière en coopération avec la patte, et d'autre part permette l'entraînement mutuel de deux bagues par butée des bandes contre les parois latérales des découpes.

La présente invention vise une nouvelle garniture d'étanchéité dont I 'étanchéité est de bien meilleur qualité que celle des garniture de l'art antérieur.

Suivant l'invention, un assemblage formant garniture d'étanchéité, pour la liaison entre un arbre et un bâti traversé par l'arbre, constitué d'une première bague, d'une deuxième bague destinée à être solidaire en rotation de l'arbre, d'un joint étanche, notamment torique, reçu dans une rainure annulaire formée à l'intérieur de la première bague, d'une rondelle métallique reçue dans la rainure annulaire de la première bague et pouvant venir en contact avec le joint et d'au moins deux, de préférence trois bandes métalliques pliées en forme d'accordéon suivant plusieurs plis définissant entre eux des flans, chaque bande métallique en accordéon ayant une première patte d'extrémité et une deuxième patte d'extrémité opposée,
est caractérisé en ce que
la première patte d'extrémité a la forme d'une fourche ayant deux branches, au moins une partie de la première branche de la fourche étant agencée de manière à venir à plat contre une face de la rondelle tournée vers la deuxième bague, la première bague comportant en outre au moins une rainure, de préférence trois rainures, débouchant à l'extérieur de la paroi latérale de la bague, et la deuxième branche de la fourche pénètre dans la rainure.

Ainsi, en ayant réussi à s'affranchir des découpes dans la première bague, on garantit une étanchéité bien meilleure. En effet, l'inventeur de la présente demande s'est rendu compte que ces découpes, présentes dans les dispositifs de l'art antérieur, affaiblissaient la première bague, ayant tendance à se déformer au niveau des découpes, et provoquant éventuellement des fuites entre la butée fixe et la bague, ce qui nuisait à l'étanchéité de la garniture dans son ensemble.

Suivant un autre mode de réalisation préféré, assurant une fixation particulièrement efficace, au moins une partie de la première bague étant enserrée entre les deux branches de la fourche.

Suivant un perfectionnement de l'invention, la deuxième bague comporte des parties évidées ou découpes, de largeur suffisante pour recevoir en largeur au moins un flan de la bande ou des bandes métalliques, et formées notamment au-dessus de trous longitudinaux destinés à recevoir la deuxième patte d'extrémité de la bande où elle vient s'accrocher, tandis que le flan le plus voisin de la deuxième patte s'applique contre le trou en passant dans la découpe.

En prévoyant ainsi des parties évidées dans lesquelles peut pénétrer la bande métallique, on peut compenser la hauteur « perdue » pour les bandes au niveau des découpes dans les premières bagues de l'art antérieur. Or la hauteur des bandes influence leur souplesse, et donc leur bon fonctionnement d'amortissement du mouvement mutuel des deux bagues. La formation de la découpe au dessus du trou remplace les découpes dans les premières bagues. correspondante de la découpe. Sans la découpe, il serait nécessaire de diminuer le nombre de plis de l'accordéon, ce qui est préjudiciable à la souplesse de la bande, et donc à sa fonction d'amortissement et de centrage.

En outre, la partie évidée étant réalisée dans la deuxième bague, notamment au niveau des trous de réception de la deuxième patte d'extrémité, il en résulte une simplification de la fabrication de la garniture dans son ensemble. En effet, maintenant, on réalise ces parties évidées ou découpes en même temps que le ou les trou(s) de réception de la patte d'extrémité et dans la deuxième bague.

Suivant un mode de réalisation préféré de l'invention, la fixation de la deuxième bague à un arbre tournant se fait par vissage dans des alésages taraudés formés dans la deuxième bague, les alésages ayant un axe s'étendant dans la direction radiale par rapport à l'axe longitudinal de la bague.

Au dessin donné uniquement à titre d'exemple, on décrit maintenant un mode de réalisation préféré de l'invention.
La figure 1 est une vue d'ensemble d'un assemblage formant garniture d'étanchéité suivant l'invention mis en place autour d'un arbre monté rotatif par rapport à un bâti.
La figure 2 représente en coupe longitudinale une bande d'un assemblage suivant l'invention.
La figure 3 représente la manière dont une bande suivant l'invention est fixé à la première bague.
La figure 4 représente partiellement, en coupe longitudinale, une deuxième bague, en coopération avec une bande suivant l'invention.
la figure 5 représente en vue de dessus la deuxième bague de la figure 4.
la figure 6 représente une vue identique à celle de la figure 3 pour un autre mode de réalisation d'une bande suivant l'invention, et
la figure 7 représente une vue identique à celle de la figure 2 d'un autre mode de réalisation d'une bande suivant l'invention.

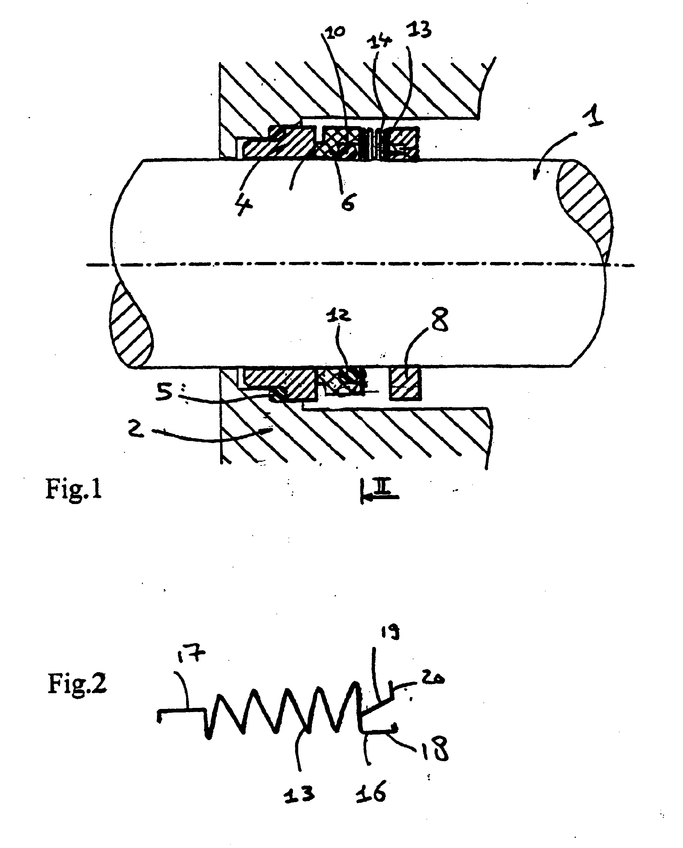

Comme on le voit à la figure 1, un arbre 1 est monté rotatif par rapport à un bâti 2. Un assemblage d'étanchéité est monté entre cet arbre tournant et ce bâti 2 de manière à permettre, d'une part, que l'arbre tourne par rapport au bâti et, d'autre part, qu'un fluide qui se trouve d'un côté du bâti ne puisse traverser la liaison entre l'arbre et le bâti pour passer de l'autre côté. L'assemblage formant garniture d'étanchéité comporte une bague 4 fixe par rapport au bâti, disposée avec un jeu (classiquement entre 0,3 et 3 mm) autour de l'arbre 1. Cette bague 4 est fixe par rapport au bâti 2. Un joint d'étanchéité 5 est disposé entre le bâti et cette bague. L'assemblage d'étanchéité comporte en outre une première bague 6 en carbure de silicium et une deuxième bague 8, par exemple en acier inoxydable. La première bague peut également être en carbone, céramiques, ou autres matériaux frittés ou métalliques ayant de bonnes propriétés tribométriques, mais sans pour autant que l'invention se limite à ces matériaux. Il est formé à l'intérieur de la première bague 6 une rainure annulaire 12 dans laquelle est reçu un joint torique 10 d'étanchéité. Une rondelle 11 annulaire métallique souple est disposée à l'intérieur de la rainure interne formée dans la première bague pouvant venir en contact avec le joint torique d'étanchéité. trois bandes métalliques, souples et pliées en accordéon sont disposées entre les deux bagues 6 et 8. La fonction de ces bandes métalliques en accordéon, qui ont une certaine élasticité liée à la faible épaisseur du métal qui les forme, est de maintenir assemblées les deux bagues l'une avec l'autre, et permet un débattement axial de la bague solidaire en rotation, pour solliciter élastiquement dans le sens axial la bague solidaire en rotation contre la première bague, et d'autre part pour transmettre à la première bague le mouvement de rotation de l'arbre 1 et de la bague qui lui est solidaire.

Dans la paroi latérale de la première bague 6, il est formé des rainures 21 débouchant à l'extérieur (c'est à dire du côté opposé à l'arbre) et de dimension en largeur suffisante pour pouvoir recevoir au moins en partie la partie en crochet de la deuxième branche de la fourche (voir ci après) de la première patte. On peut notamment prévoir autant de fentes qu'il y a de bandes métalliques. On peut aussi prévoir une seule fente annulaire.

La bande métallique 13 comporte un certain nombre de plis 14, entre lesquels s'étendent le même nombre de flans plus 1, une première patte d'extrémité 16 et une deuxième patte d'extrémité 17. La première patte d'extrémité 16 a la forme d'une fourche ayant deux branches 18, 19. La première branche 19 comporte un tronçon de forme aplatie 20, qui vient en contact avec la face opposée au joint torique d'étanchéité de la rondelle. La deuxième branche 18 a une forme en crochet, la partie en crochet pénétrant dans la fente 21 correspondante formée dans la première bague et débouchant au moins à l'extérieur de celle ci.

La deuxième bague, classiquement en acier inoxydable, est fixée solidaire en rotation de l'arbre 1 par l'intermédiaire de vis et de trous taraudés dont les axes sont transversaux à l'axe longitudinal de l'arbre.

En outre, cette bague comporte trois trous 30 formés longitudinaux parallèles à l'axe de l'arbre. Dans ces trois trous 30, pénètrent les deuxièmes pattes d'extrémité des bandes métalliques élastiques. Les trous 30 traversent de part en part la bague 8. Du côté de la bague 8 tournée vers la première bague, il est formé une découpe 31 de largeur correspondant sensiblement (légèrement supérieure) à la largeur d'un flan d'une bande métallique. La hauteur de cette découpe est sensiblement égale à la moitié de l'épaisseur de la bague, tandis que l'autre moitié (en hauteur) de la bague correspond à la hauteur d'un trou 30.

Les trois découpes sont décalées les unes des autres de 120° le long de la périphérie de la bague 8. Elles ont chacune deux parois latérales 32, en forme d'arc de cercle pour mieux bloquer le flan le plus voisin de la patte qui s'applique sur le trou, le blocage participant ainsi à la fonction de centrage de la garniture d'étanchéité. La deuxième patte d'extrémité de ou des bande(s) métallique(s) pénètre à l'intérieur du trou 30 et la partie en crochet de cette patte s'y accroche.

La première bague ne comporte plus de découpe débouchant au bord supérieur de la bague, ce qui l'affaiblissait et diminuait sa résistance aux contraintes en flexion, ce qui nuisait à I 'étanchéité dans son ensemble de la garniture. Suivant l'invention, au contraire, on obtient une garniture plus étanche, et ce sans porter atteinte à la souplesse des bandes métalliques, et donc sans porter atteinte à leur propriété de centrage et d'amortissement.

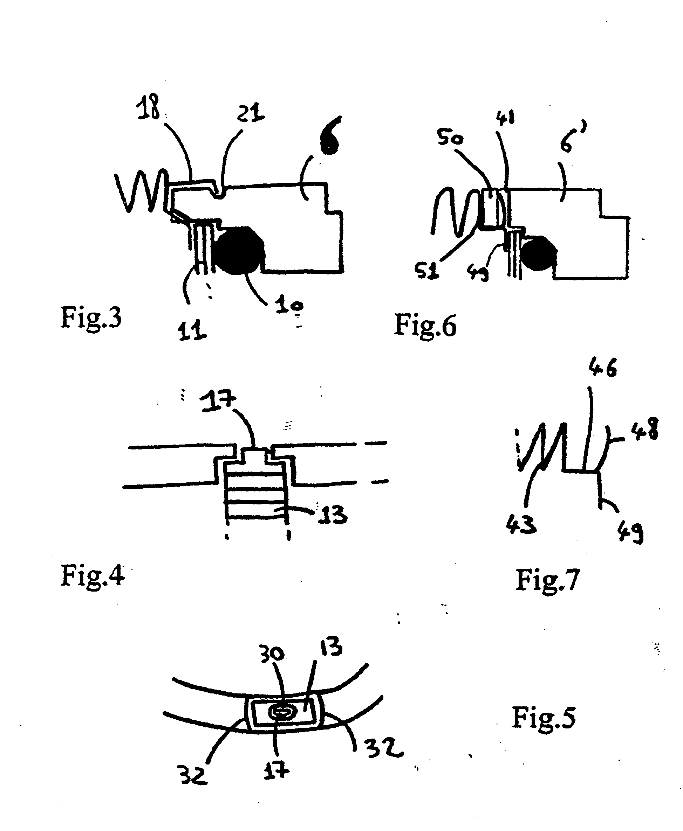

Aux figures 6 et 7, il est représenté un autre mode de réalisation d'une première patte d'une bande suivant l'invention et d'une première bague suivant l'invention. Il y est formé dans la première bague 6', une rainure 41 correspondant à la rainure 21 du premier mode de réalisation. Cependant, la rainure 41 traverse la paroi latérale de la bague de part en part pour déboucher aussi bien à l'intérieur qu'à l'extérieur de cette bague. Quant à la bande 43, elle comporte une première patte 46 d'extrémité et une deuxième patte d'extrémité qui n'est pas représentée à la figure et qui est identique à la patte d'extrémité 17. La première patte 46 a une forme de fourche, ayant une première branche 49 et une deuxième branche 48. La première branche 49 pénètre dans la fente ou rainure 41 traversante, tandis que la deuxième branche 48 vient s'appliquer à plat sur l'une des faces (celle tournée vers la deuxième bague) de la rondelle. Une partie 50 d'extrémité de la première bague 6' est enserrée entre la première branche 49 et le flan 51 d'extrémité voisin de la première patte.

## Revendications

1. Assemblage formant garniture d'étanchéité, pour la liaison entre un arbre (1) et un bâti (2) traversé par l'arbre, constitué d'une première bague (6, 6'), d'une deuxième bague (8) destinée à être solidaire en rotation de l'arbre, d'un joint (5) étanche, notamment torique, reçu dans une rainure (12) annulaire formée à l'intérieur de la première bague (6, 6'), d'une rondelle (11) métallique reçue dans la rainure annulaire de la première bague et pouvant venir en contact avec le joint et d'au moins deux, de préférence trois bandes (13) métalliques pliées en forme d'accordéon suivant plusieurs plis (14) définissant entre eux des flans, chaque bande métallique en accordéon ayant une première patte (16, 46) d'extrémité et une deuxième patte (17) d'extrémité opposée,
**caractérisé en ce que**
la première patte (16, 46) d'extrémité a la forme d'une fourche ayant deux branches (18,19 ;48,49), au moins une partie de la première branche (19 ; 49) de la fourche étant agencée de manière à venir à plat contre une face de la rondelle (11) tournée vers la deuxième bague, la première bague comportant en outre au moins une rainure (21 ; 41), de préférence trois rainures, débouchant à l'extérieur de la paroi latérale de la bague, et la deuxième branche (18 ; 48) de la fourche pénètre dans la rainure (21 ; 41).

2. Assemblage suivant la revendication 1, **caractérisé en ce que** la deuxième branche (18) a la forme d'un crochet.

3. Assemblage suivant la revendication 1 ou 2, **caractérisée en ce que** la rainure (41) traverse la première bague (6') de part en part.

4. Assemblage suivant la revendication 1 ou 2, **caractérisée en ce que** au moins une partie de la première bague (6) est enserrée entre les deux branches (18, 19) de la fourche.

5. Assemblage suivant l'une des revendications précédentes, **caractérisé en ce que** une partie (50) d'extrémité de la première bague (6') est enserrée entre la première branche (49) et le flan (51) d'extrémité voisin de la première patte.

6. Assemblage suivant l'une des revendications précédentes, **caractérisé en ce que** la deuxième bague (8) comporte des parties évidées ou découpes (31) de largeur suffisante pour recevoir en largeur au moins un flan de la bande ou les bandes métalliques, et formées au-dessus de trous (30) longitudinaux destinés à recevoir la deuxième patte d'extrémité de la bande, la deuxième patte d'extrémité en forme de crochet traversant la bague par le trou pour venir s'accrocher dans la paroi du trou (30), tandis que le flan le plus voisin de la deuxième patte s'applique contre le bord du trou, du côté intérieur de la bague, en passant dans la découpe.

7. Assemblage suivant l'une des revendications 1 à 6, **caractérisé en ce que** la première bague est en carbure de silicium, tandis que la deuxième bague est en acier notamment inoxydable.

8. Assemblage suivant l'une des revendications 1 à 7, **caractérisé en ce que** la fixation de la deuxième bague à un arbre tournant se fait par vissage dans des alésages taraudés formés dans la deuxième bague, les alésages ayant un axe s'étendant dans la direction radiale par rapport à l'axe longitudinal de la bague.

9. Assemblage suivant l'une des revendications 6 à 8, **caractérisé en ce que** les trois découpes (31) sont décalées les unes des autres de 120° le long de la périphérie de la deuxième bague.

10. Assemblage suivant l'une des revendications 6 à 9, **caractérisé en ce que** la hauteur (dans le sens de l'axe longitudinal de la bague) des découpes (31) est sensiblement égale à celle des trous (30).

## Claims

1. Assembly forming a packing seal to link a shaft (1) and a frame (2) crossed by the shaft, consisting of a first ring (6, 6'), a second ring (8) intended to be attached as the shaft rotates, a waterproof and, more particularly, toric seal (5) accommodated in an annular groove (12) formed inside the first ring (6, 6'), a metal washer (11) accommodated in the annular groove of the first ring and able to come into contact with the seal and of at least two, preferably three metal strips (13) folded into a concertina with several folds (14), which together define blanks, each metal concertina strip having a first end foot (16, 46) and a second end foot (17) opposite,
whereby
the first end foot (16, 46) in the shape of a fork has two branches (18, 19; 48, 49), at least one part of the first branch (19; 49) of the fork being constructed in such a way that it lies flat against one face of the washer (11) turned towards the second ring, the first ring also comprising at least one groove (21; 41), preferably three grooves leading to the exterior of the side wall of the ring. The second branch (18; 48) of the fork penetrates the groove (21, 41).

2. Assembly according to claim 1, whereby the second branch (18) is shaped like a hook.

3. Assembly according to claim 1 or 2, whereby the groove (41) crosses straight through the first ring (6').

4. Assembly according to claim 1 or 2 whereby at least one section of the first ring (6) is gripped between the two branches (18, 19) of the fork.

5. Assembly according to one of the previous claims, whereby one end section (50) of the first ring (6') is gripped between the first branch (49) and the end blank (51) close to the first foot.

6. Assembly according to one of the previous claims, whereby the second ring (8) comprises hollowed out sections or recesses (31) wide enough to take the width of at least one blank of the strip or metal strips and formed above longitudinal holes (30) to take the second end foot of the strip, the second end foot shaped like a hook crossing the ring through the hole and fixing itself into the wall of the hole (30), while the blank closest to the second foot is applied against the edge of the hole, on the inner side of the ring, passing into the recess.

7. Assembly according to one of claims 1 to 6, whereby the first ring is silicon carbide, whereas the second ring is steel, more particularly stainless steel.

8. Assembly according to one of claims 1 to 7, whereby the second ring is fastened to a rotating shaft by screwing into threaded bore holes formed in the second ring, the bore holes having an axis extending in a radial direction in relation to the ring's longitudinal axis.

9. Assembly according to one of claims 6 to 8, whereby the three recesses (31) are each staggered at 120° along the periphery of the second ring.

10. Assembly according to one of claims 6 to 9, whereby the height (in the direction of the ring's longitudinal axis) of the recesses (31) is roughly equal to the height of the holes (30).

## Patentansprüche

1. Dichtungsanordnung zur Verbindung zwischen einer Welle (1) und einem von der Welle durchsetzten Gehäuse (2), die aus einem ersten Ring (6, 6'), einem zur drehfesten Verbindung mit der Welle bestimmten zweiten Ring (8), einer Dichtung (5), insbesondere einem O-Ring, der in einer innerhalb des ersten Rings (6, 6') ausgeführten Ringnut (12) aufgenommen ist, einer Metallringscheibe (11), die in der Ringnut des ersten Rings aufgenommen ist und mit der Dichtung in Kontakt gelangen kann, und aus zumindest zwei, vorzugsweise drei Metallbändern (13) besteht, die ziehharmonikaartig in mehreren Falten (14) gelegt sind, die Abschnitte zueinander definieren, wobei jedes ziehharmonikaartige Metallband eine erste Endlasche (16, 46) und eine entgegengesetzte zweite Endlasche (17) aufweist,
**dadurch gekennzeichnet, dass**
die erste Endlasche (16, 46) die Form einer Gabel mit zwei Schenkeln (18, 19; 48, 49) hat, wobei zumindest ein Abschnitt des ersten Schenkels (19; 49) der Gabel so angeordnet ist, dass er flach an einer dem zweiten Ring zugewandten Seite der Ringscheibe (11) zu liegen kommt, wobei der erste Ring ferner zumindest eine Nut (21; 41), vorzugsweise drei Nuten enthält, die nach außerhalb der Seitenwand des Rings münden, wobei der zweite Schenkel (18; 48) der Gabel in die Nut (21; 41) eingreift.

2. Anordnung nach Anspruch 1, **dadurch gekennzeichnet, dass** der zweite Schenkel (18) hakenförmig ist.

3. Anordnung nach Anspruch 1 oder 2, **dadurch gekennzeichnet, dass** die Nut (41) den ersten Ring (6') durchgehend durchsetzt.

4. Anordnung nach Anspruch 1 oder 2, **dadurch gekennzeichnet, dass** zumindest ein Abschnitt des ersten Rings (6) zwischen den beiden Schenkeln (18, 19) der Gabel eingeklemmt ist.

5. Anordnung nach einem der vorangehenden Ansprüche, **dadurch gekennzeichnet, dass** ein Endabschnitt (50) des ersten Rings (6') zwischen dem ersten Schenkel (49) und dem der ersten Lasche benachbarten Endabschnitt (51) eingeklemmt ist.

6. Anordnung nach einem der vorangehenden Ansprüche, **dadurch gekennzeichnet, dass** der zweite Ring (8) ausgesparte Abschnitte bzw. Ausschnitte (31) enthält, die eine ausreichende Breite aufweisen, um zumindest einen Abschnitt des bzw. der Metallbänder in der Breite aufzunehmen, und die oberhalb von Langlöchern (30) ausgebildet sind, die dazu bestimmt sind, die zweite Endlasche des Bandes aufzunehmen, wobei die hakenförmige zweite Endlasche den Ring das Loch durchsetzt, um sich in die Wandung des Lochs (30) einzuhaken, während der der zweiten Lasche am nächsten liegende Abschnitt an dem Rand des Lochs auf der Innenseite des Rings anliegt, indem er in den Ausschnitt eintritt.

7. Anordnung nach einem der Ansprüche 1 bis 6, **dadurch gekennzeichnet, dass** der erste Ring aus Siliziumkarbid besteht, während der zweite Ring aus insbesondere rostfreiem Stahl besteht.

8. Anordnung nach einem der Ansprüche 1 bis 7, **dadurch gekennzeichnet, dass** die Befestigung des zweiten Rings an einer Drehwelle durch Einschrauben in Gewindebohrungen erfolgt, die in dem zweiten Ring ausgebildet sind, wobei die Bohrungen sich mit ihrer Achse in radialer Richtung bezüglich der Längsachse des Rings erstrecken.

9. Anordnung nach einem der Ansprüche 6 bis 8, **dadurch gekennzeichnet, dass** die drei Ausschnitte (31) um 120° entlang des Umfangs des zweiten Rings zueinander versetzt sind.

10. Anordnung nach einem der Ansprüche 6 bis 9, **dadurch gekennzeichnet, dass** die Höhe (in Richtung der Längsachse des Rings) der Ausschnitte (31) im Wesentlichen gleich der der Löcher ist (30).
